# FASCICULE DE BREVET EUROPEEN

(11) **EP 4 543 665 B1**
(45) Date de publication et mention de la délivrance du brevet: **09.12.2026**
(21) Numéro de dépôt: 23739624.7
(22) Date de dépôt: 19.06.2023
(51) Int. Cl.: B29C 65/02, B29C 65/50, B29C 65/18, B29C 65/32, B29K 21/00, B29L 23/00

(54) **PROCÉDÉ D'ASSEMBLAGE DE TUYAUX SOUPLES EN ÉLASTOMÈRE ET ENSEMBLE DE TUYAUX AINSI ASSEMBLÉS**
VERFAHREN ZUR MONTAGE VON FLEXIBLEN ELASTOMERROHREN UND AUF DIESE WEISE MONTIERTE ROHRANORDNUNG
METHOD FOR ASSEMBLING FLEXIBLE ELASTOMER PIPES AND PIPE ASSEMBLY THUS ASSEMBLED

(30) Priorité: 23.06.2022 FR 2206267
(43) Date de publication de la demande: 30.04.2025
(73) Titulaire: Trelleborg Clermont-Ferrand, 63000 Clermont-Ferrand (FR)
(72) Inventeur: GAVAIX, Pierre, 63115 MEZEL (FR); MARCONNET, Loïc, 63520 ESTANDEUIL (FR); MAYAU, David, 63450 TALLENDE (FR)
(74) Mandataire: Ipsilon
(86) Numéro de dépôt international: PCT/FR2023/050892
(87) Numéro de publication internationale: WO 2023/247875

(56) Documents cités:
- FR-A1- 2 432 129

## Description

### Domaine de l'invention

La présente invention concerne un procédé d'assemblage de tuyaux, et plus particulièrement un procédé d'assemblage par emboîtement de tuyaux souples en élastomère et un ensemble de tuyaux souples en élastomère assemblés au moyen dudit procédé.

### Etat de la technique

La fabrication de tuyaux souples en élastomères, tels que des élastomères renforcés par des armatures textiles ou métalliques, implique une étape de vulcanisation pour obtenir la performance nominale des élastomères et l'adhésion entre les différents constituants.

Lorsque l'on a besoin d'un tuyau souple dont la longueur est supérieure à la longueur maximale de fabrication en une seule pièce, il devient nécessaire d'assembler au moins deux ou plusieurs longueurs de tuyaux.

Une méthode classique d'assemblage consiste à équiper les tuyaux de raccords d'extrémités et à les assembler par l'intermédiaire de ces raccords. Il existe de nombreuses méthodes de montage de raccords (par exemple par sertissage, dudgeonnage, colliers demi-coquilles, ligatures, colliers de serrage à crémaillère de type Serflex^{®}, collier en matière plastique de type Colson^{®}, collier de type Band-it^{®}, ...) et également de nombreux types de raccords (douilles filetées males/femelle, bride, raccord ½ symétrique, ...).

Une particularité commune à tous les assemblages par raccord est d'introduire une partie rigide dans cet ensemble de tuyaux souples. Pour certaines applications, la présence de cette partie rigide est un grave handicap. Un exemple caractéristique concerne les tuyaux flexibles destinés à être stockés sur un enrouleur et encore plus s'ils sont conçus pour être enroulés à plat. Dans les deux cas, la présence d'une telle partie rigide est la cause de concentration de contraintes dans le tuyau aux extrémités de la zone rigide et également de risques d'endommagement du revêtement du tuyau sur les zones anguleuses du raccord. Dans le second cas, l'enroulement à plat de la jonction rigide n'est tout simplement pas possible.

Pour pallier ces inconvénients, certains fabricants ont développé des méthodes d'assemblage consistant à insérer les extrémités des tuyaux en élastomères déjà vulcanisés sur un mandrin et à construire au-dessus une jonction par addition de couches d'élastomères et de renforts supplémentaires. Ces méthodes impliquent une nouvelle vulcanisation et le choix de matériaux particuliers car l'obtention d'adhésions correctes entre élastomères crus et élastomères déjà vulcanisés est particulièrement difficile. D'autre part, les épaisseurs supplémentaires rigidifient la zone de jonction, même si cette zone de liaison reste plus souple qu'en présence de raccords rigides.

Pour améliorer la souplesse d'une telle jonction fabriquée par addition de couches d'élastomères et de renforts, il a été proposé de fabriquer les extrémités des tuyaux à assembler avec un dégradé progressif de leurs couches constituantes. La réalisation de la jonction par addition de couches d'élastomères et de renforts supplémentaires va donc venir combler les manques au lieu de créer des surépaisseurs. La jonction réalisée est certes plus souple, mais aussi de plus grande longueur, et nécessite un temps de fabrication plus important.

FR2432129A1 divulgue par exemple un procédé et un équipement pour le raccordement de tuyaux où : on enlève le revêtement extérieur des deux extrémités du tuyau sur une certaine longueur, on met à nu le tissu de renforcement, on gratte les parties des extrémités de la jonction, on monte les extrémités du tuyau sur un mandrin creux en plâtre présentant une gorge concave et après avoir enroulé une longueur d'élastomère non vulcanisé dans la gorge du mandrin jusqu'à l'affleurement de la surface externe du mandrin, on bourre une matière de garniture dans les espaces libres entre les extrémités du tuyau. On enroule ensuite une bande de tissu caoutchouté sur ses deux faces qui a une largeur égale à la partie dénudée des extrémités de tuyau, on enveloppe le tout d'une bande de matière pour revêtement extérieur non vulcanisé, et on enroule sur la jonction une bande en nylon thermo-rétractable, à quatre épaisseurs puis on enroule autour de ce ruban un ruban chauffant pour vulcaniser la jonction. Après la vulcanisation, on brise le mandrin creux en plâtre au marteau, les fragments étant évacués par un courant de fluide.

Une autre méthode d'assemblage des tuyaux souples en élastomères consiste à utiliser de la colle. Le cahier des charges de la colle est particulièrement complexe : étanchéité parfaite, compatibilité avec les matériaux à coller, nécessité de rester flexible, tenue en fatigue, tenue au vieillissement (compatibilité avec l'environnement et avec le fluide véhiculé dans le tuyau). La performance de la jonction collée est limitée par la résistance au cisaillement du joint de colle, résistance qui est en général faible pour les colles souples. Le collage d'un tuyau sur l'autre implique également l'apparition de surépaisseurs avec des bords abruptes en marche d'escalier, à l'intérieur et à l'extérieur du tuyau. Ces surépaisseurs abruptes peuvent perturber l'écoulement à intérieur du tuyau et gêner la manipulation en s'accrochant sur des surfaces angulaires à l'extérieur. L'utilisation de colle introduit également des contraintes de préparation de surface et de mise en œuvre qui réduisent la fiabilité et augmentent le temps de mise en œuvre. A l'échelle industrielle, la performance intrinsèque et la fiabilité de ce type de jonction ne sont pas très satisfaisantes.

### Buts de l'invention

En conséquence, un premier but de l'invention est de pallier les inconvénients ci-dessus en proposant un procédé d'assemblage de tuyaux souples en élastomères, enroulables à plat, ne comportant pas de raccords rigides.

Un autre but de l'invention est de proposer un procédé d'assemblage de tuyaux souples en élastomères permettant de réaliser une jonction présentant des propriétés mécaniques en cisaillement supérieures à celles des colles habituellement utilisées, c'est à dire une jonction dont la résistance est supérieure à celle des tuyaux individuels.

Un autre but de l'invention est de proposer un procédé d'assemblage de tuyaux souples en élastomères permettant de réaliser une jonction ne créant qu'une faible surépaisseur, sans bord abrupte en marche d'escalier, et donc sans rigidifier l'ensemble autorisant ainsi l'enroulement à plat de tuyaux de grandes longueurs, et sans perturbation de l'écoulement dans le tuyau ou de risque d'accrochage à l'extérieur.

Un autre but de l'invention est de proposer un procédé d'assemblage de tuyaux souples en élastomères permettant de réaliser une jonction entre les tuyaux parfaitement étanche.

Un autre but de l'invention est de proposer un procédé d'assemblage de tuyaux souples en élastomères permettant de réaliser une jonction compatible avec les diverses utilisations et conditions d'utilisation desdits tuyaux : fluides véhiculés, environnement, enroulements et déroulements fréquents, pression, traction, température, tuyaux de grands diamètres.

Un autre but de l'invention est de proposer un procédé d'assemblage de tuyaux souples en élastomères rapide et réalisable à une échelle industrielle.

### Description de l'invention

Les buts ci-dessus, ainsi que d'autres, sont atteints par le procédé d'assemblage selon la présente invention. Ce procédé concerne un procédé d'assemblage par emboîtement d'au moins deux tuyaux souples au moins partiellement en élastomère et présentant l'un, au moins une extrémité mâle, l'autre, au moins une extrémité femelle pour ledit emboîtement, chaque tuyau présentant une surface externe tournée vers l'extérieur du tuyau et une surface interne opposée, ledit procédé comprenant une étape de vulcanisation desdits tuyaux au cours de laquelle les tuyaux sont soumis à un chauffage, caractérisé en ce que le procédé comprend :
- avant l'étape de vulcanisation, une étape d'application au niveau au moins des extrémités mâle et femelle desdits tuyaux d'au moins un film polymère, l'un des films étant disposé au moins sur la surface interne au moins partiellement en élastomère de l'extrémité femelle de l'un des tuyaux et l'autre ou un autre des films étant disposé au moins sur la surface externe au moins partiellement en élastomère de l'extrémité mâle de l'autre des tuyaux,
- en ce que qu'au cours de l'étape de vulcanisation, chaque tuyau est chauffé à une température au moins égale à la température de fusion du film l'équipant pour permettre, concomitamment à la vulcanisation du ou des élastomères dudit tuyau, une adhérence du film à la surface au moins partiellement en élastomère du tuyau par une première fusion du film,
- puis après l'étape de vulcanisation, et refroidissement, une étape d'emboîtement à force des extrémités mâle et femelle desdits tuyaux suivie d'une étape de chauffage desdites extrémités à une température supérieure à la température de fusion des films pour une fusion des films entre eux sous pression de contact, en vue d'un assemblage indémontable desdits tuyaux entre eux, cette fusion correspondant à une seconde fusion des films.

Ainsi, l'étape de vulcanisation accompagnée de la première fusion du film permet de créer une forte adhérence dudit film à la surface de l'élastomère de chaque tuyau. Après l'emboîtement des extrémités mâles et femelles des tuyaux, lors de la seconde étape de fusion, les deux films fusionnent ensemble et s'interpénètrent, ce qui permet après refroidissement, d'obtenir une jonction parfaite des deux tuyaux, indémontable.

De préférence, les films présentent, après la première étape de fusion et après refroidissement, un coefficient de friction à sec compris entre 0,1 et 0,2 favorisant l'emboîtement à force de l'extrémité femelle sur l'extrémité mâle, c'est-à-dire un coefficient de friction à sec bien inférieur à celui de l'élastomère constituant les parois des tuyaux à assembler.

Le procédé d'assemblage selon l'invention peut être caractérisé en ce que les tuyaux sont des tuyaux souples enroulables à plat. La jonction réalisée peut conserver avantageusement cette propriété de souplesse.

De préférence les films présentent une épaisseur comprise entre 0,01 mm et 0,5 mm, de préférence entre 0,02 mm et 0,3 mm, de préférence encore entre 0,05 mm et 0,2 mm. Ces épaisseurs permettent à l'assemblage de rester souple et enroulable à plat. La jonction des tuyaux assemblés ne présente en effet qu'une très faible surépaisseur.

De manière préférée, les extrémités mâle et femelle des tuyaux à emboîter présentent des diamètres tels que le diamètre interne de l'extrémité femelle est plus petit que le diamètre externe de l'extrémité mâle, l'extrémité femelle étant élastiquement déformable radialement, permettant l'emboîtement à force des extrémités mâle et femelle desdits tuyaux et la pression de contact par compression radiale de l'extrémité femelle sur l'extrémité mâle pendant la seconde étape de fusion. Ceci assure une parfaite étanchéité de la jonction après la fusion des deux films entre eux.

Selon un mode de réalisation de l'invention, lors de l'étape d'emboîtement, l'extrémité mâle du tuyau est montée sur un cylindre métallique, l'étape de chauffage conduisant à la seconde fusion des films étant réalisée par chauffage dudit cylindre métallique.

Ce chauffage du cylindre métallique peut être réalisé par exemple : par induction électromagnétique, avec un dispositif de chauffage par induction en enroulant un inducteur autour de la jonction (dans ce cas le matériau constitutif du cylindre métallique ne doit bien entendu pas être amagnétique), par conduction thermique, en faisant circuler un fluide chaud dans le cylindre, vapeur ou huile, par conduction thermique, en insérant des résistances électriques dans ledit cylindre, ou encore par rayonnement, en insérant un système de chauffage par lampes infra-rouge dans le cylindre.

Le chauffage par induction est préféré. Le principal avantage du chauffage par induction est d'éviter d'avoir à introduire des flexibles d'alimentation de fluide ou des câbles électriques dans l'un des tuyaux à assembler pour alimenter le cylindre métallique et chauffer seulement la zone nécessaire à la jonction.

Dans tous les cas, le chauffage est piloté selon un cycle prédéfini à la suite d'essais, ou bien des thermocouples sont présents au niveau de la jonction pour garantir l'obtention des températures pour la seconde fusion des films.

Un tel chauffage étant réalisé par l'intérieur, il est avantageux d'isoler thermiquement l'extérieur de la jonction pour atteindre les températures souhaitées dans la totalité de l'épaisseur de la jonction.

La pression de contact appliquée lors de l'étape de seconde fusion des films peut être renforcée par un collier de serrage ou l'enroulement d'une sangle autour de l'extrémité femelle du tuyau après emboîtement sur l'extrémité mâle.

Selon un mode de réalisation de l'invention, lors de l'étape d'emboîtement l'extrémité mâle du tuyau est montée sur un mandrin dilatable radialement, l'étape de chauffage conduisant à la seconde fusion des films étant réalisée par chauffage d'un cylindre métallique enfilé autour de la jonction qui est plaquée contre ce cylindre par l'expansion radiale du mandrin dilatable. Un tel mandrin est avantageusement un mandrin de diamètre inférieur au diamètre interne du tuyau mais dilatable à des diamètres supérieurs au diamètre interne de l'extrémité mâle du tuyau.

Ce mandrin peut être un mandrin à paroi en caoutchouc, tels que des tuyaux dilatables en caoutchouc produits et commercialisés par la société du présent demandeur, dont le diamètre augmente lorsqu'ils sont soumis à une pression interne.

Le mandrin dilatable est gonflé jusqu'à ce que l'intérieur de l'extrémité mâle du tuyau soit en contact avec l'extérieur du mandrin expansible et ne puisse plus se déplacer sur celui-ci.

L'extrémité femelle du second tuyau est alors emmanchée en force sur la l'extrémité mâle du premier tuyau, les propriétés d'élasticité de l'élastomère du tuyau se traduisant par une force de compression radiale exercée par l'extrémité femelle sur l'extrémité mâle.

Une compression radiale supplémentaire est appliquée en augmentant la pression de gonflage du mandrin, préférentiellement entre 5 et 20 bars.

La pression de gonflage maximale, donc une compression optimale, est obtenue par exemple par enroulement sous tension d'une sangle sur la jonction avant le gonflage, ou par positionnement d'un cylindre métallique, préférentiellement en acier ou en aluminium, d'un diamètre légèrement supérieur à la jonction, autour de la jonction avant ledit gonflage.

La montée en température de la zone de jonction pour la fusion des films entre eux est alors réalisée en chauffant la jonction par l'extérieur. Ce chauffage peut être réalisé selon l'une des méthodes suivantes :
- par induction électromagnétique, en utilisant un dispositif de chauffage par induction si on utilise un cylindre métallique magnétique autour de la jonction. L'inducteur est enroulé sur ce cylindre ;
- par conduction thermique, en construisant autour de la jonction une enceinte étanche dans laquelle circule de la vapeur ;
- ou par rayonnement, en utilisant un système de chauffage par lampes infra-rouge placé autour de la jonction des tuyaux.

Ainsi, de manière préférée, le procédé d'assemblage selon la présente invention est caractérisé en ce que le chauffage est réalisé par induction électromagnétique du cylindre métallique support, le chauffage étant réalisé par l'intérieur ou par le cylindre métallique extérieur quand un mandrin dilatable est utilisé.

Dans tous les cas, quand le chauffage se fait par l'extérieur, il est préférable que le mandrin dilatable présente une bonne isolation thermique sur la face interne de la jonction.

Dans un mode de réalisation particulier, le procédé d'assemblage selon la présente invention est caractérisé en ce que la pression de contact appliquée lors de l'étape de seconde fusion des films est renforcée par un collier de serrage ou l'enroulement d'une sangle autour de l'extrémité femelle du tuyau dans le cas de l'utilisation d'un mandrin métallique comme support de la jonction ou par compression contre un tube métallique externe dans le cas de l'utilisation d'un mandrin dilatable comme support de la jonction.

Selon des modes particuliers de réalisation du procédé selon l'invention, l'élastomère, formulé pour adhérer au film lors de sa vulcanisation, concomitante avec la première fusion du film, et rester adhérer au film lors de la seconde fusion du film, comprend un élastomère choisi parmi : un caoutchouc EPDM, de préférence un EPDM modifié par adjonction de poly-isoprène, ou un caoutchouc NR, de préférence un caoutchouc NR modifié avec un carboxylate métallique, ou un copolymère butadiène-acrylonitrile (dénommé NBR), de préférence modifié par adjonction d'un composé hétérocyclique azoté, tel qu'un triazole, de préférence encore modifié par adjonction d'un benzotriazole.

Par caoutchouc EPDM on entend un élastomère terpolymère préparé à partir de monomère éthylène-propylène-diène.

Par caoutchouc NR on entend les « caoutchoucs naturels ». Un caoutchouc naturel est typiquement un polyisoprénoïde pouvant provenir de la coagulation de latex de plusieurs plantes, principalement de l'hévéa, *Hevea brasiliensis.*

Par caoutchouc NBR on entend les « caoutchoucs nitriles » sigle pour en anglais « nitrile-butadiène rubber », caoutchouc butadiène-nitrile.

Parmi les couples desdits élastomères précités avec des films pour réaliser le procédé selon la présente invention, les couples élastomères/films suivants sont préférés :
- l'élastomère est un caoutchouc EPDM modifié par adjonction de poly-isoprène ou un caoutchouc NR modifié avec un carboxylate métallique et lesdits films comprennent une polyoléfine, tel qu'un polyéthylène, de préférence un polyéthylène à haut poids moléculaire ; ou
- l'élastomère est un copolymère butadiène-acrylonitrile (dénommé NBR) modifié par adjonction de benzotriazole et les films comprennent un polymère fluoré tel qu'un terpolymère de tétrafluoroéthylène, hexafluoropropylène et fluorure de vinylidène (dénommé THV).

De préférence la température de chauffage correspondant à la seconde fusion des films est comprise entre 135°C et 180°C, de préférence comprise entre 140°C et 170°C.

La présente invention concerne également un ensemble d'au moins deux tuyaux souples, au moins partiellement en élastomère, assemblables par emboîtement et présentant l'un au moins une extrémité mâle, l'autre une extrémité femelle pour ledit emboîtement, caractérisé en ce que lesdits tuyaux sont assemblés par emboîtement conformément au procédé décrit ci-dessus, par l'intermédiaire de films polymère, l'un des films étant disposé au moins sur la surface interne au moins partiellement en élastomère de l'extrémité femelle de l'un des tuyaux et l'autre ou un autre des films étant disposé au moins sur la surface externe au moins partiellement en élastomère de l'extrémité mâle de l'autre des tuyaux, l'assemblage desdits tuyaux entre eux étant indémontable.

Le couple élastomère/film polymère de chaque tuyau présente en particulier une forte adhérence après la vulcanisation desdits tuyaux, qui est conservée après la seconde fusion des films après emboîtement desdits tuyaux entre eux.

Dans cet ensemble les tuyaux sont avantageusement des tuyaux en élastomère, souples, enroulables à plat, de préférence en élastomère renforcé par des armatures textiles ou métalliques. Le procédé selon l'invention permettant de conserver à la jonction des tuyaux le caractère souple, ainsi que les propriétés d'aplatissement à plat des tuyaux, l'ensemble peut comprendre une multiplicité de tuyaux et être ainsi d'une très grande longueur.

La présente invention concerne en outre l'utilisation d'un tel ensemble de tuyaux caractérisé en ce que l'assemblage des tuyaux ne présente pas de bords abrupts en marche d'escalier ni à l'intérieur ni à l'extérieur de la jonction.

La présente invention concerne également l'utilisation d'un tel ensemble de tuyaux pour le pompage des poissons, avec des tuyaux ayant de préférence un diamètre intérieur compris entre 200 mm et 610 mm, l'élastomère étant un caoutchouc EPDM modifié par adjonction de poly-isoprène et lesdits films comprenant une polyoléfine, tel qu'un polyéthylène, de préférence un polyéthylène à haut poids moléculaire. Un tel ensemble de tuyaux permet de transférer par pompage des poissons de la mer dans les cuves d'un bateau, en situation de pêche ou dans des installations d'aquaculture.

La présente invention concerne également l'utilisation d'un tel ensemble de tuyaux, notamment pour le transport d'hydrocarbures, les tuyaux ayant de préférence un diamètre intérieur compris entre 50 mm et 250 mm, l'élastomère étant un copolymère butadiène-acrylonitrile (dénommé NBR) modifié par adjonction de benzotriazole et les films comprenant un polymère fluoré tel qu'un terpolymère de tétrafluoroéthylène, hexafluoropropylène et fluorure de vinylidène (dénommé THV). Un tel ensemble de tuyaux permet notamment de transférer des hydrocarbures sur de longues distances en mer.

### Brève description des dessins

L'invention sera bien comprise à la lecture de la description suivante d'exemples de réalisation, en référence aux dessins annexés dans lesquels :
[Fig. 1] représente une vue en coupe de l'extrémité male d'un tuyau souple en élastomère après application du film polymère sur sa surface externe.
[Fig. 2] représente une vue en coupe de l'extrémité femelle d'un tuyau souple en élastomère après application du film polymère sur sa surface interne.
[Fig. 3] représente une vue en coupe des extrémités assemblés des deux tuyaux des figures 1 et 2 selon le procédé de la présente invention.

### Exemples

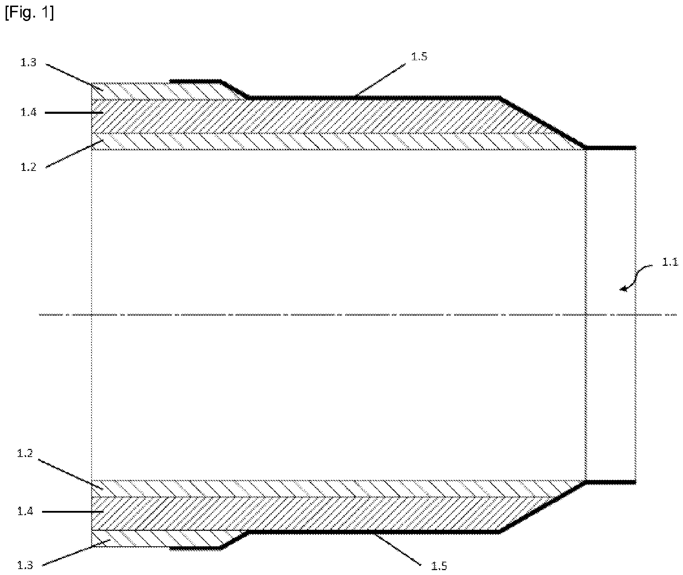

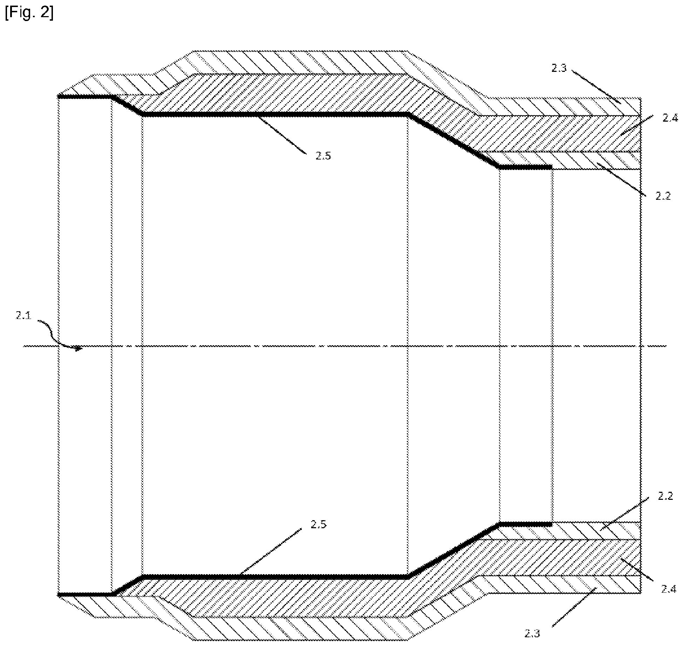

Les tuyaux sont des tuyaux en matériau élastomère renforcé. Les tuyaux individuels à assembler sont fabriqués avec une extrémité mâle et une extrémité femelle. Ces extrémités mâle et femelle des tuyaux sont schématisées respectivement sur les figures 1 et 2. Pour une meilleure compréhension des différentes couches en présence à ces extrémités de tuyaux, les schémas ne sont pas représentés à l'échelle.

La paroi d'un tuyau se compose d'un tube interne en élastomère et d'un revêtement externe également en élastomère, entre lesquels sont disposées des couches de renfort (textile calandré d'élastomère).

Au niveau de l'extrémité mâle, schématisée sur la figure 1, une couche de film 1.5 recouvre la surface externe à la fois du revêtement externe 1.3, de la couche de renfort 1.4 et du tube interne 1.2.

Au niveau de l'extrémité femelle, schématisée sur la figure 2, une couche de film 2.5 recouvre la surface interne à la fois du revêtement externe 2.3, de la couche de renfort 2.4 et du tube interne 2.2.

Après vulcanisation du tuyau, ces couches de films 1.5 et 2.5 sont parfaitement adhérées l'une à la surface interne de l'extrémité femelle, l'autre à la surface externe de l'extrémité mâle.

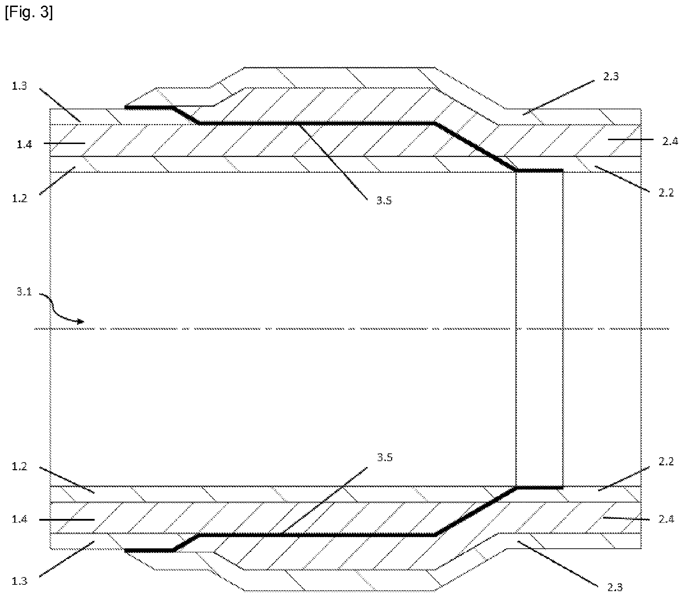

Le diamètre interne de l'extrémité femelle est plus petit que le diamètre externe de l'extrémité mâle. Pour réaliser la jonction, l'extrémité femelle d'un tuyau est emmanchée en force, par déformation radiale élastique, sur l'extrémité mâle d'un autre tuyau, placée sur un tube rigide ou un mandrin dilatable. Il est possible d'augmenter la compression radiale par l'ajout d'une sangle, d'un collier de serrage lors de l'utilisation des mandrins rigides et dilatables ou d'un cylindre rigide externe dans le cas de l'utilisation du mandrin dilatable. La zone de recouvrement est chauffée à une température supérieure à la température de fusion du film. Après refroidissement, les deux films 1.5 et 2.5 en contact l'un avec l'intérieur de la partie femelle et l'autre avec l'extérieur de la partie mâle sont fusionnés en un seul film 3.5 (voir la vue en coupe de la figure 3) et les deux tuyaux sont alors parfaitement assemblés, avec le tube interne de la partie mâle 1.2 aligné avec le tube interne de la partie femelle 2.2, assurant une continuité de passage.

### Exemple 1 : Ensemble de tuyaux pour le pompage des poissons

Dans cette application, les tuyaux sont des tuyaux en élastomère renforcé de câbles textiles, à paroi mince, enroulables à plat. L'élastomère doit être compatible avec un contact prolongé avec l'eau de mer, résistant à l'abrasion et à la graisse de poissons. L'élastomère du revêtement doit également être compatible avec toutes les contraintes liées à une exposition à un environnement marin. La gamme de diamètre intérieur de ces tuyaux va habituellement de 200 mm à 610 mm. Les pressions de service requises sont de quelques bars (2 à 3 bars) et les pressions d'éclatement doivent être supérieures à 10 bars. Ces tuyaux sont confectionnés et vulcanisés sur des mandrins rigides dont la longueur est limitée. Il existe des besoins pour des longueurs de tuyaux supérieures aux longueurs individuelles disponibles d'où la nécessité de réaliser des assemblages de tuyaux. Ces assemblages doivent :
- permettre à l'ensemble de tuyaux assemblés de rester enroulable à plat ;
- permettre à l'ensemble de tuyaux assemblés de conserver une pression d'utilisation et une résistance à la traction au moins équivalente à la résistance en traction des longueurs individuelles ;
- permettre à l'ensemble de tuyaux assemblés de rester adapté à sa fonction qui est de transférer des poissons, sans perturbation de l'écoulement dans le tuyau.

Pour réaliser ces jonctions innovantes, le demandeur a utilisé des films en polyéthylène à haut poids moléculaire d'épaisseur comprise entre 0,05 mm et 0,2 mm. Outre la possibilité de le trouver sous forme d'un film très mince, les intérêts de ce type de matériau sont d'être résistant à l'eau de mer, d'avoir un coefficient de friction faible (environ 0,1 à 0,2) et une résistance à rupture > 20 MPa. Ce type de matériau donne des adhérences correctes sur les élastomères de la famille des EPDM. L'adjonction de poly-isoprène dans la formulation des élastomères au contact de ces films a permis d'obtenir une cohésion parfaite du film sur l'élastomère lors de la vulcanisation initiale de l'élastomère et de conserver cette adhésion lors de la seconde montée en température (voisine de 145 °C dans cet exemple) destinée à la fusion des films des extrémités mâle et femelle des tuyaux.

La jonction est parfaitement étanche. La longueur de la zone de recouvrement est adaptée en fonction de la force axiale requise. Pour l'application des tuyaux de pompage de poissons enroulables à plat, cette longueur est de 0,5 fois le diamètre intérieur du tuyau.

Avec cette longueur de jonction, des essais d'éclatement et des essais destructifs en traction axiale ont abouti à une rupture dans le corps du tuyau, en dehors de la zone de jonction.

### Exemple 2 : tuyaux utilisés pour le transfert d'hydrocarbure

Dans cette application, les tuyaux sont des tuyaux en élastomère renforcé de câbles textiles, à paroi mince, enroulables à plat. L'élastomère du tube doit être compatible avec un contact prolongé avec des hydrocarbures. L'élastomère du revêtement doit aussi être compatible avec toutes les contraintes liées à une exposition à un environnement marin et résistant à l'abrasion. Les pressions de service requises sont de 10 bars à 15 bars avec des pressions d'éclatement respectivement supérieures à 40 bars et 60 bars. La gamme de diamètre intérieur va de 50 mm à 250 mm.

Il existe des besoins pour des longueurs de tuyaux supérieures aux longueurs individuelles disponibles d'où la nécessité de réaliser des assemblages de tuyaux. Ces assemblages doivent :
- Permettre au tuyau complet de rester enroulable à plat
- Permettre au tuyau complet de conserver une pression d'utilisation et une résistance à la traction au moins équivalente à celles des longueurs individuelles
- Permettre au tuyau complet de rester adapté à sa fonction qui est de transférer des hydrocarbures ;

Pour réaliser ses jonctions innovantes, le demandeur a utilisé des films en THV (terpolymère de tétrafluoroéthylène, hexafluoropropylène et fluorure de vinylidène) d'épaisseurs comprise entre 0,05 mm et 0,2 mm. Outre la possibilité de trouver ce type de films en films très minces, les autres intérêts de ces films sont d'être résistants à l'eau de mer et aux hydrocarbures, d'avoir un coefficient de friction faible (environ 0,1 à 0,2) et une résistance à rupture > 20 MPa. Le demandeur a formulé un mélange NBR modifié par adjonction d'un benzotriazole, qui adhère parfaitement au film lors de sa vulcanisation initiale et conserve cette cohésion lors de la seconde montée en température (155°C dans cet exemple particulier) destinée à la fusion des films des extrémités mâle et femelle.

La jonction est parfaitement étanche. La longueur de la zone de recouvrement est adaptée selon la force axiale requise. Pour l'application des tuyaux de transport d'hydrocarbures, il a été vérifié qu'une longueur égale à une fois le diamètre intérieur du tuyau permettait d'obtenir sur un test d'éclatement la rupture en plein corps du tuyau, hors de la zone de jonction.

Les modifications apportées aux formules élastomères de base rendent la séparation des composants élastomères/films, après l'étape de vulcanisation des tuyaux et après l'assemblage par fusion des films, quasi impossible, sauf par déchirure d'un des composants. En effet, avec les formules présentées dans les exemples ci-dessus, les essais de pliages répétitifs simulant plusieurs milliers d'enroulement à plat du tuyau ont abouti à la délamination entre les couches de renfort textile des tuyaux avant qu'aucun dommage n'apparaisse aux interfaces élastomère/film et film/film de la jonction.

## Revendications

1. Procédé d'assemblage par emboîtement d'au moins deux tuyaux souples au moins partiellement en élastomère et présentant l'un, au moins une extrémité mâle, l'autre, au moins une extrémité femelle pour ledit emboîtement, chaque tuyau présentant une surface externe tournée vers l'extérieur du tuyau et une surface interne opposée, ledit procédé comprenant une étape de vulcanisation desdits tuyaux au cours de laquelle les tuyaux sont soumis à un chauffage, **et** au cours de laquelle chaque tuyau est chauffé à une température au moins égale à la température de fusion du film l'équipant pour permettre, concomitamment à la vulcanisation du ou des élastomères dudit tuyau, une adhérence du film à la surface au moins partiellement en élastomère du tuyau par une première fusion du film,
- avant l'étape de vulcanisation, une étape d'application au niveau au moins des extrémités mâle et femelle desdits tuyaux d'au moins un film polymère, l'un des films étant disposé au moins sur la surface interne au moins partiellement en élastomère de l'extrémité femelle de l'un des tuyaux et l'autre ou un autre des films étant disposé au moins sur la surface externe au moins partiellement en élastomère de l'extrémité mâle de l'autre des tuyaux,
- puis après l'étape de vulcanisation, et refroidissement, une étape d'emboîtement à force des extrémités mâle et femelle desdits tuyaux suivie d'une étape de chauffage desdites extrémités à une température supérieure à la température de fusion des films pour une fusion des films entre eux sous pression de contact, en vue d'un assemblage indémontable desdits tuyaux entre eux, cette fusion correspondant à une seconde fusion des films.

2. Procédé d'assemblage selon la revendication 1, **caractérisé en ce que** les films présentent, après la première étape de fusion et après refroidissement, un coefficient de friction à sec compris entre 0,1 et 0,2 favorisant l'emboîtement à force de l'extrémité femelle sur l'extrémité mâle.

3. Procédé d'assemblage selon la revendication 1 ou 2, **caractérisé en ce que** les tuyaux sont des tuyaux souples enroulables à plat.

4. Procédé d'assemblage selon l'une quelconque des revendications précédentes, **caractérisé en ce que** les extrémités mâle et femelle des tuyaux à emboîter présentent des diamètres tels que le diamètre interne de l'extrémité femelle est plus petit que le diamètre externe de l'extrémité mâle, l'extrémité femelle étant élastiquement déformable radialement, permettant l'emboîtement à force des extrémités mâle et femelle desdits tuyaux et la pression de contact par compression radiale de l'extrémité femelle sur l'extrémité mâle pendant la seconde étape de fusion.

5. Procédé d'assemblage selon l'une quelconque des revendications précédentes, **caractérisé en ce que**, lors de l'étape d'emboîtement, l'extrémité mâle du tuyau est montée sur un cylindre métallique, l'étape de chauffage conduisant à la seconde fusion des films étant réalisée par chauffage dudit cylindre métallique.

6. Procédé d'assemblage selon l'une quelconque des revendications 1 à 4, **caractérisé en ce que**, lors de l'étape d'emboîtement l'extrémité mâle du tuyau est montée sur un mandrin dilatable radialement, l'étape de chauffage conduisant à la seconde fusion des films étant réalisée par chauffage d'un cylindre métallique enfilé autour de la jonction qui est plaquée contre ce cylindre par l'expansion radiale du mandrin dilatable.

7. Procédé d'assemblage selon la revendication 5 ou 6, **caractérisé en ce que** le chauffage est réalisé par induction électromagnétique du cylindre métallique support, le chauffage étant réalisé par l'intérieur ou par le cylindre métallique extérieur quand un mandrin dilatable est utilisé.

8. Procédé d'assemblage selon l'une quelconque des revendications précédentes, **caractérisé en ce que** la pression de contact appliquée lors de l'étape de seconde fusion des films est renforcée par un collier de serrage ou l'enroulement d'une sangle autour de l'extrémité femelle du tuyau dans le cas de l'utilisation d'un mandrin métallique comme support de la jonction ou par compression contre un tube métallique externe dans le cas de l'utilisation d'un mandrin dilatable comme support de la jonction.

9. Procédé d'assemblage selon l'une quelconque des revendications précédentes, **caractérisé en ce que** les films présentent une épaisseur comprise entre 0,01 mm et 0,5 mm, de préférence entre 0,02 mm et 0,3 mm, de préférence encore entre 0,05 mm et 0,2 mm.

10. Procédé d'assemblage selon l'une quelconque des revendications précédentes, **caractérisé en ce que** l'élastomère, formulé pour adhérer au film lors de sa vulcanisation, concomitante avec la première fusion du film, et rester adhérer au film lors de la seconde fusion du film, comprend un élastomère choisi parmi : un caoutchouc EPDM, de préférence un EPDM modifié par adjonction de poly-isoprène, ou un caoutchouc NR, de préférence un caoutchouc NR modifié avec un carboxylate métallique, ou un copolymère butadiène-acrylonitrile (dénommé NBR), de préférence modifié par adjonction d'un composé hétérocyclique azoté, tel qu'un triazole, de préférence encore modifié par adjonction d'un benzotriazole.

11. Procédé d'assemblage selon l'une quelconque des revendications précédentes, **caractérisé en ce que** l'élastomère est un caoutchouc EPDM modifié par adjonction de poly-isoprène ou un caoutchouc NR modifié avec un carboxylate métallique et lesdits films comprennent une polyoléfine, tel qu'un polyéthylène, de préférence un polyéthylène à haut poids moléculaire.

12. Procédé d'assemblage selon l'une quelconque des revendications 1 à 10, **caractérisé en ce que** l'élastomère est un copolymère butadiène-acrylonitrile (dénommé NBR) modifié par adjonction de benzotriazole et les films comprennent un polymère fluoré tel qu'un terpolymère de tétrafluoroéthylène, hexafluoropropylène et fluorure de vinylidène (dénommé THV).

13. Procédé d'assemblage selon l'une quelconque des revendications précédentes, **caractérisé en ce que** la température de chauffage correspondant à la seconde fusion des films est comprise entre 135°C et 180°C, de préférence comprise entre 140°C et 170°C.

14. Ensemble d'au moins deux tuyaux souples, au moins partiellement en élastomère, assemblables par emboîtement et présentant l'un au moins une extrémité mâle, l'autre une extrémité femelle pour ledit emboîtement, tel que lesdits tuyaux sont assemblés par emboîtement conformément au procédé selon l'une quelconque des revendications précédentes, par l'intermédiaire de films polymère, l'un des films étant disposé au moins sur la surface interne au moins partiellement en élastomère de l'extrémité femelle de l'un des tuyaux et l'autre ou un autre des films étant disposé au moins sur la surface externe au moins partiellement en élastomère de l'extrémité mâle de l'autre des tuyaux, l'assemblage desdits tuyaux entre eux étant indémontable.

15. Ensemble selon la revendication 14, **caractérisé en ce que** le couple élastomère/film polymère de chaque tuyau présente une forte adhérence après la vulcanisation desdits tuyaux, qui est conservée après la seconde fusion des films après emboîtement desdits tuyaux entre eux.

16. Ensemble selon la revendication 14 ou 15 **caractérisé en ce que** les tuyaux sont des tuyaux en élastomère, souples, enroulables à plat, de préférence en élastomère renforcé par des armatures textiles ou métalliques.

17. Ensemble selon la revendication 14 à 16 **caractérisé en ce que** l'assemblage des tuyaux ne présente pas de bords abrupts en marche d'escalier ni à l'intérieur ni à l'extérieur de la jonction.

18. Utilisation de l'ensemble de tuyaux selon l'une quelconque des revendications 14 à 17 en dépendance de l'une des revendications 10 ou 11 pour le pompage des poissons, avec des tuyaux ayant de préférence un diamètre intérieur compris entre 200 mm et 610 mm.

19. Utilisation de l'ensemble de tuyaux selon l'une quelconque des revendications 14 à 17 en dépendance de l'une des revendications 10 ou 12, notamment pour le transport d'hydrocarbures, les tuyaux ayant de préférence un diamètre intérieur compris entre 50 mm et 250 mm.

## Patentansprüche

1. Verfahren zum Verbinden durch Ineinanderstecken von mindestens zwei flexiblen Schläuchen, die mindestens teilweise aus Elastomer sind und von denen einer mindestens ein männliches Ende und der andere mindestens ein weibliches Ende zum Ineinanderstecken aufweist, wobei jeder Schlauch eine zur Außenseite des Schlauches gewandte Außenfläche und eine entgegengesetzte Innenfläche aufweist, wobei das Verfahren einen Schritt des Vulkanisierens der Schläuche umfasst, während dessen die Schläuche einer Erwärmung unterzogen werden,
und während dessen jeder Schlauch auf eine Temperatur erwärmt wird, die mindestens gleich der Schmelztemperatur der Folie ist, mit der er ausgestattet ist, um gleichzeitig mit dem Vulkanisieren des oder der Elastomere des Schlauches ein Haften der Folie an der mindestens teilweise aus Elastomer bestehenden Oberfläche des Schlauches durch ein erstes Schmelzen der Folie zu ermöglichen,
- vor dem Schritt des Vulkanisierens einen Schritt des Applizierens mindestens einer Polymerfolie an mindestens den männlichen und weiblichen Enden der Schläuche, wobei eine der Folien mindestens auf der mindestens teilweise aus Elastomer bestehenden Innenfläche des weiblichen Endes eines der Schläuche angeordnet wird und wobei die andere oder eine andere der Folien mindestens auf der mindestens teilweise aus Elastomer bestehenden Außenfläche des männlichen Endes des anderen der Schläuche angeordnet wird,
- dann nach dem Schritt des Vulkanisierens und Abkühlens einen Schritt des kraftschlüssigen Ineinandersteckens der männlichen und weiblichen Enden der Schläuche, gefolgt von einem Schritt des Erwärmens der Enden auf eine Temperatur über der Schmelztemperatur der Folien zum Verschmelzen der Folien unter Kontaktdruck im Hinblick auf eine unlösbare Verbindung der Schläuche untereinander, wobei dieses Schmelzen einem zweiten Schmelzen der Folien entspricht.

2. Verfahren zum Verbinden nach Anspruch 1, **dadurch gekennzeichnet, dass** die Folien nach dem ersten Schritt des Schmelzens und nach dem Abkühlen einen Trockenreibungskoeffizienten zwischen 0,1 und 0,2 aufweisen, der das kraftschlüssige Aufstecken des weiblichen Endes auf das männliche Ende begünstigt.

3. Verfahren zum Verbinden nach Anspruch 1 oder 2, **dadurch gekennzeichnet, dass** die Schläuche flach aufrollbare flexible Schläuche sind.

4. Verfahren zum Verbinden nach einem der vorhergehenden Ansprüche, **dadurch gekennzeichnet, dass** die männlichen und weiblichen Enden der ineinanderzusteckenden Schläuche derartige Durchmesser aufweisen, dass der Innendurchmesser des weiblichen Endes kleiner als der Außendurchmesser des männlichen Endes ist, wobei das weibliche Ende radial elastisch verformbar ist, was das kraftschlüssige Ineinanderstecken der männlichen und weiblichen Enden der Schläuche und den Kontaktdruck durch radiale Kompression des weiblichen Endes auf das männliche Ende während des zweiten Schritts des Schmelzens ermöglicht.

5. Verfahren zum Verbinden nach einem der vorhergehenden Ansprüche, **dadurch gekennzeichnet, dass** bei dem Schritt des Ineinandersteckens das männliche Ende des Schlauches auf einen Metallzylinder montiert wird, wobei der zum zweiten Schmelzen der Folien führende Schritt des Erwärmens durch Erwärmen des Metallzylinders ausgeführt wird.

6. Verfahren zum Verbinden nach einem der Ansprüche 1 bis 4, **dadurch gekennzeichnet, dass** beim Schritt des Ineinandersteckens das männliche Ende des Schlauches auf einen radial dehnbaren Dorn montiert wird, wobei der zum zweiten Schmelzen der Folien führende Schritt des Erwärmens durch Erwärmen eines Metallzylinders ausgeführt wird, der um die Verbindungsstelle aufgeschoben wird, die durch die radiale Spreizung des dehnbaren Dorns gegen diesen Zylinder gepresst wird.

7. Verfahren zum Verbinden nach Anspruch 5 oder 6, **dadurch gekennzeichnet, dass** das Erwärmen durch elektromagnetische Induktion des metallischen Stützzylinders ausgeführt wird, wobei das Erwärmen von innen ausgeführt wird oder durch den äußeren Metallzylinder, wenn ein dehnbarer Dorn verwendet wird.

8. Verfahren zum Verbinden nach einem der vorhergehenden Ansprüche, **dadurch gekennzeichnet, dass** der bei dem Schritt des zweiten Schmelzens der Folien aufgebrachte Kontaktdruck durch eine Spannschelle oder das Wickeln eines Gurts um das weibliche Ende des Schlauches im Fall der Verwendung eines Metalldorns als Stütze der Verbindungsstelle oder durch Kompression gegen ein äußeres Metallrohr im Fall der Verwendung eines dehnbaren Dorns als Stütze der Verbindungsstelle verstärkt wird.

9. Verfahren zum Verbinden nach einem der vorhergehenden Ansprüche, **dadurch gekennzeichnet, dass** die Folien eine Dicke zwischen 0,01 mm und 0,5 mm, bevorzugt zwischen 0,02 mm und 0,3 mm, besonders bevorzugt zwischen 0,05 mm und 0,2 mm aufweisen.

10. Verfahren zum Verbinden nach einem der vorhergehenden Ansprüche, **dadurch gekennzeichnet, dass** das Elastomer, das so zusammengesetzt ist, dass es bei seiner Vulkanisation beim ersten Schmelzen der Folie an der Folie haftet und während des zweiten Schmelzens der Folie an der Folie haften bleibt, ein Elastomer umfasst, das ausgewählt ist aus: einem EPDM-Kautschuk, bevorzugt einem durch Zugabe von Polyisopren modifizierten EPDM, oder einem NR-Kautschuk, bevorzugt einem mit einem Metallcarboxylat modifizierten NR-Kautschuk, oder einem Butadien-Acrylnitril-Copolymer (als NBR bezeichnet), das bevorzugt durch Zugabe einer stickstoffhaltigen heterocyclischen Verbindung wie einem Triazol modifiziert ist, besonders bevorzugt durch Zugabe eines Benzotriazols modifiziert ist.

11. Verfahren zum Verbinden nach einem der vorhergehenden Ansprüche, **dadurch gekennzeichnet, dass** das Elastomer ein durch Zugabe von Polyisopren modifizierter EPDM-Kautschuk oder ein mit einem Metallcarboxylat modifizierter NR-Kautschuk ist und die Folien ein Polyolefin wie ein Polyethylen, bevorzugt ein Polyethylen mit hohem Molekulargewicht, umfassen.

12. Verfahren zum Verbinden nach einem der Ansprüche 1 bis 10, **dadurch gekennzeichnet, dass** das Elastomer ein durch Zugabe von Benzotriazol modifiziertes Butadien-Acrylnitril-Copolymer (als NBR bezeichnet) ist und die Folien ein Fluorpolymer wie ein Terpolymer aus Tetrafluorethylen, Hexafluorpropylen und Vinylidenfluorid (als THV bezeichnet) umfassen.

13. Verfahren zum Verbinden nach einem der vorhergehenden Ansprüche, **dadurch gekennzeichnet, dass** die Erwärmungstemperatur, die dem zweiten Schmelzen der Folien entspricht, zwischen 135 °C und 180 °C liegt, bevorzugt zwischen 140 °C und 170 °C liegt.

14. Anordnung aus mindestens zwei flexiblen Schläuchen, die mindestens teilweise aus Elastomer sind, die durch Ineinanderstecken verbindbar sind und von denen einer mindestens ein männliches Ende und der andere ein weibliches Ende zum Ineinanderstecken aufweist, so dass die Schläuche durch Ineinanderstecken gemäß dem Verfahren nach einem der vorhergehenden Ansprüche mittels Polymerfolien verbunden werden, wobei eine der Folien mindestens auf der mindestens teilweise aus Elastomer bestehenden Innenfläche des weiblichen Endes eines der Schläuche angeordnet ist und wobei die andere oder eine andere der Folien mindestens auf der mindestens teilweise aus Elastomer bestehenden Außenfläche des männlichen Endes des anderen der Schläuche angeordnet ist, wobei die Verbindung der Schläuche untereinander unlösbar ist.

15. Anordnung nach Anspruch 14, **dadurch gekennzeichnet, dass** das Paar Elastomer/Polymerfolie jedes Schlauches nach dem Vulkanisieren der Schläuche eine starke Haftung aufweist, die nach dem zweiten Schmelzen der Folien nach dem Ineinanderstecken der Schläuche erhalten bleibt.

16. Anordnung nach Anspruch 14 oder 15, **dadurch gekennzeichnet, dass** die Schläuche flach aufrollbare flexible Schläuche aus Elastomer sind, bevorzugt aus durch textile oder metallische Verstärkungen verstärktem Elastomer.

17. Anordnung nach Anspruch 14 bis 16, **dadurch gekennzeichnet, dass** die Verbindung der Schläuche weder innerhalb noch außerhalb der Verbindungsstelle abrupte stufenartige Kanten aufweist.

18. Verwendung der Anordnung von Schläuchen nach einem der Ansprüche 14 bis 17 in Abhängigkeit von einem der Ansprüche 10 oder 11 zum Pumpen von Fischen mit Schläuchen, die bevorzugt einen Innendurchmesser zwischen 200 mm und 610 mm aufweisen.

19. Verwendung der Anordnung von Schläuchen nach einem der Ansprüche 14 bis 17 in Abhängigkeit von einem der Ansprüche 10 oder 12, insbesondere zum Transportieren von Kohlenwasserstoffen, wobei die Schläuche bevorzugt einen Innendurchmesser zwischen 50 mm und 250 mm aufweisen.

## Claims

1. A method for assembly by fitting together at least two flexible hoses at least partially made of elastomer, one having at least one male end, the other having at least one female end for said fitting-together, each hose having an outer surface oriented toward the outside of the hose and an opposite inner surface, said method comprising a step of vulcanizing said hoses during which the hoses are subjected to heating and during which each hose is heated to a temperature at least equal to the melting point of the film with which it is equipped in order to enable, concomitantly with the vulcanization of the one or more elastomers of said hose, the film to adhere to the surface at least partially made of elastomer of the hose through a first melting of the film,
- before the vulcanization step, a step of applying at least one polymer film at at least the male and female ends of said hoses, one of the films being arranged at least on the inner surface at least partially made of elastomer of the female end of one of the hoses and the other or another of the films being arranged at least on the outer surface at least partially made of elastomer of the male end of the other of the hoses,
- then, after the vulcanization step, and cooling, a step of force-fitting the male and female ends of said hoses together followed by a step of heating said ends to a temperature greater than the melting point of the films in order for the films to melt together under contact pressure, with the aim of non-detachably assembling said hoses together, this melting corresponding to a second melting of the films.

2. The assembly method as claimed in claim 1, **characterized in that** the films have, after the first melting step and after cooling, a coefficient of dry friction of between 0.1 and 0.2, which promotes the force-fitting of the female end onto the male end.

3. The assembly method as claimed in claim 1 or 2, **characterized in that** the hoses are flexible hoses that can be rolled flat.

4. The assembly method as claimed in any one of the preceding claims, **characterized in that** the male and female ends of the hoses to be fitted together have diameters such that the inner diameter of the female end is smaller than the outer diameter of the male end, the female end being radially elastically deformable, which enables the force-fitting of the male and female ends of said hoses together and the contact pressure through radial compression of the female end on the male end during the second melting step.

5. The assembly method as claimed in any one of the preceding claims, **characterized in that**, in the fitting-together step, the male end of the hose is mounted on a metal cylinder, the heating step leading to the second melting of the films being performed by heating said metal cylinder.

6. The assembly method as claimed in any one of claims 1 to 4, **characterized in that**, in the fitting-together step, the male end of the hose is mounted on a radially expandable mandrel, the heating step leading to the second melting of the films being performed by heating a metal cylinder placed around the joint that is pressed against this cylinder through radial expansion of the expandable mandrel.

7. The assembly method as claimed in claim 5 or 6, **characterized in that** the heating is performed through electromagnetic induction of the supporting metal cylinder, the heating being performed from the inside or by the outer metal cylinder when an expandable mandrel is used.

8. The assembly method as claimed in any one of the preceding claims, **characterized in that** the contact pressure applied in the step of second melting of the films is reinforced by a clamping collar or by winding a strap around the female end of the hose if a metal mandrel is being used to support the joint or through compression against an outer metal tube if an expandable mandrel is being used to support the joint.

9. The assembly method as claimed in any one of the preceding claims, **characterized in that** the films have a thickness of between 0.01 mm and 0.5 mm, preferably between 0.02 mm and 0.3 mm, more preferably between 0.05 mm and 0.2 mm.

10. The assembly method as claimed in any one of the preceding claims, **characterized in that** the elastomer, which is formulated to adhere to the film during vulcanization thereof, concomitantly with the first melting of the film, and to remain adhered to the film during the second melting of the film, comprises an elastomer selected from: an EPDM rubber, preferably an EPDM modified through addition of polyisoprene, or an NR rubber, preferably an NR rubber modified with a metal carboxylate, or a butadiene-acrylonitrile copolymer (known as NBR), preferably modified through addition of a heterocyclic nitrogen compound, such as a triazole, more preferably modified through addition of a benzotriazole.

11. The assembly method as claimed in any one of the preceding claims, **characterized in that** the elastomer is an EPDM rubber modified through addition of polyisoprene or an NR rubber modified with a metal carboxylate and said films comprise a polyolefin, such as a polyethylene, preferably a high-molecular-weight polyethylene.

12. The assembly method as claimed in any one of claims 1 to 10, **characterized in that** the elastomer is a butadiene-acrylonitrile copolymer (known as NBR) modified through addition of benzotriazole and the films comprise a fluoropolymer such as a terpolymer of tetrafluoroethylene, hexafluoropropylene and vinylidene fluoride (known as THV).

13. The assembly method as claimed in any one of the preceding claims, **characterized in that** the heating temperature corresponding to the second melting of the films is between 135°C and 180°C, preferably between 140°C and 170°C.

14. An assembly of at least two flexible hoses, which are at least partially made of elastomer and can be assembled by fitting together, one having at least one male end, the other having a female end for said fitting-together, wherein said hoses are assembled by fitting together in accordance with the method as claimed in any one of the preceding claims, by means of polymer films, one of the films being arranged at least on the inner surface at least partially made of elastomer of the female end of one of the hoses and the other or another of the films being arranged at least on the outer surface at least partially made of elastomer of the male end of the other of the hoses, the assembly of said hoses together being non-detachable.

15. The assembly as claimed in claim 14, **characterized in that** the elastomer/polymer film pair of each hose has a strong adherence after the vulcanization of said hoses, which is maintained after the second melting of the films after said hoses have been fitted together.

16. The assembly as claimed in claim 14 or 15, **characterized in that** the hoses are flexible hoses that are made of elastomer and can be rolled flat, preferably made of elastomer reinforced with textile or metal reinforcements.

17. The assembly as claimed in claims 14 to 16, **characterized in that** the assembly of the hoses does not have any abrupt step-like edges on the inside or on the outside of the joint.

18. The use of the hose assembly as claimed in any one of claims 14 to 17 where dependent on either of claims 10 and 11 for fish pumping, with hoses preferably having an inner diameter of between 200 mm and 610 mm.

19. The use of the hose assembly as claimed in any one of claims 14 to 17 where dependent on either of claims 10 and 12, in particular for transporting hydrocarbons, the hoses preferably having an inner diameter of between 50 mm and 250 mm.
